# EUROPEAN PATENT APPLICATION

(11) **EP 4 769 811 A1**
(43) Date of publication of application: **01.07.2026**
(21) Application number: 24899232.3
(22) Date of filing: 09.07.2024
(51) Int. Cl.: H01M 50/531, H01M 50/528, H01M 50/50, H01M 10/04

(54) **BATTERY CELL, BATTERY, ELECTRIC DEVICE, AND ENERGY STORAGE CABINET**

(30) Priority: 06.12.2023 CN 202311675470
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); GUO, Jipeng, Ningde, Fujian 352100 (CN); NIU, Shaojun, Ningde, Fujian 352100 (CN); ZHAO, Fenggang, Ningde, Fujian 352100 (CN)
(74) Representative: Gong, Jinping
(86) International application number: PCT/CN2024/104430
(87) International publication number: WO 2025/118581

(57) **Abstract**

The present application provides a battery cell, a battery, an electrical apparatus, and an energy storage cabinet, and belongs to the field of battery technologies. The battery cell includes a shell, a plurality of pole groups and a plurality of electrode terminals. The shell has a wall portion. A plurality of pole groups are accommodated in the shell and arranged along a first direction. The pole groups comprise a main body group and two tab groups. The two tab groups are spaced apart along the first direction on one side of the main body group in a second direction, and the two tab groups have opposite polarities. A plurality of electrode terminals are installed on the wall portion and are spaced apart along the first direction. Along the first direction, two tab groups close to each other in two adjacent pole groups have the same polarity and are electrically connected to one electrode terminal in common, and two tab groups farthest apart from each other in the plurality of pole groups are electrically connected to two electrode terminals respectively. This can save electrode terminals provided on the shell, and is beneficial for optimizing the production rhythm of the battery cells, thereby improving the production efficiency of the battery cells and reducing the manufacturing cost of the battery cells.

## Description

### CROSS-REFERENCE TO RELATED APPLICATION

The present application claims priority to Chinese Patent Application No. 2023116754703 filed on December 06, 2023 and titled "BATTERY CELL, BATTERY, ELECTRICAL APPARATUS, AND ENERGY STORAGE CABINET", which is incorporated herein by reference in its entirety.

### TECHNICAL FIELD

The present application relates to the field of battery technologies, and more particularly, to a battery cell, a battery, an electrical apparatus, and an energy storage cabinet.

### BACKGROUND

In recent years, new energy vehicles have made a leap forward in development. In the field of electric vehicles, power batteries, as power sources of electric vehicles, play an irreplaceable and important role. With the vigorous promotion of new energy vehicles, the demand for power battery products is also growing. Batteries, as core components of new energy vehicles, have relatively high requirements in terms of use performance. The battery cell of a battery typically includes a shell and an electrode assembly accommodated in the shell. In order to improve the electric capacity of the battery cell, it is typically necessary to increase the volume of the electrode assembly to realize a large-capacity battery cell. However, existing large-capacity battery cells are difficult to assemble during the assembling process which includes many assembly procedures, which is adverse to improving the production efficiency of the battery cells.

### SUMMARY

Embodiments of the present application provide a battery cell, a battery, an electrical apparatus, and an energy storage cabinet capable of effectively improving the production efficiency of the battery cell.

In a first aspect, an embodiment of the present application provides a battery cell, comprising a shell, a plurality of pole groups and a plurality of electrode terminals; the shell having a wall portion; the plurality of pole groups being accommodated in the shell and arranged along a first direction, the pole groups comprising a main body group and two tab groups, the two tab groups being spaced apart along the first direction on one side of the main body group in a second direction, and the two tab groups having opposite polarities, and the second direction intersecting with the first direction; the plurality of electrode terminals being installed on the wall portion and spaced apart along the first direction; where, along the first direction, two of the tab groups close to each other in two adjacent pole groups have the same polarity and are electrically connected to one of the electrode terminals in common, and two of the tab groups farthest apart from each other in the plurality of pole groups are electrically connected to two of the electrode terminals respectively.

In the above technical solution, a plurality of pole groups arranged along a first direction are provided in the shell of the battery cell, and each pole group comprises a main body group and two tab groups with opposite polarities spaced apart along the first direction on one side of the main body group, so that the battery cell is provided with a plurality of electrode assemblies, which is beneficial for improving the electric capacity of the battery cell to realize a large-capacity battery cell. The two tab groups close to each other in the first direction in two adjacent pole groups are provided to have the same polarity and be electrically connected to the same electrode terminal, and the two tab groups farthest apart from each other in the plurality of pole groups are connected to two electrode terminals respectively, so that the input or output of electric energy of the battery cell can be realized simply by electrically connecting the two tab groups close to each other in two adjacent pole groups to one electrode terminal, so that the two tab groups close to each other in the two adjacent pole groups can share one electrode terminal. As such, with a battery cell adopting such a structure, the electrode terminals provided on the wall portion of the shell can be saved to optimize the process of assembling the electrode terminals on the shell, and only one electrode terminal needs to be electrically connected to the two tab groups to complete the assembly process of the two tab groups, which is beneficial for optimizing the production rhythm of the battery cell, thereby effectively improving the production efficiency of the battery cell, and reducing the manufacturing cost of the battery cell.

In some embodiments, the battery cell further comprises a plurality of current collecting components; the plurality of current collecting components are disposed in one-to-one correspondence with the plurality of electrode terminals, and the current collecting components are connected with the corresponding electrode terminals; where, along the first direction, two of the tab groups close to each other in two adjacent pole groups are electrically connected to one of the current collecting components in common, and two of the tab groups farthest apart from each other in the plurality of pole groups are electrically connected to two of the current collecting components respectively.

In the above technical solution, the battery cell is further provided with a plurality of current collecting components corresponding to the electrode terminals, and the two tab groups farthest apart from each other in the plurality of pole groups are respectively connected with two electrode terminals through two current collecting components, and the two tab groups close to each other along the first direction in the two adjacent pole groups are connected to the same electrode terminal through a current collecting component to realize the input or output of electric energy of the battery cell. With a battery cell adopting such a structure, the difficulty of assembling the tab groups with the electrode terminals can be reduced, especially the difficulty of assembling the two tab groups close to each other in two adjacent pole groups with the same electrode terminal, which is beneficial for reducing the manufacturing cost of the battery cell and improving the production efficiency of the battery cell.

In some embodiments, the plurality of current collecting components are all provided in the shell, and the plurality of current collecting components are spaced apart along the first direction; or, along the second direction, the side of the shell close to the tab groups is provided with a channel for allowing each of the tab groups to extend out, and each of the tab groups can extend out of the shell through the corresponding channel, the plurality of current collecting components are all disposed outside the shell, and the current collecting components are electrically connected to the extended tab groups.

In the above technical solution, by disposing all of the plurality of current collecting components in the shell, and by arranging the plurality of current collecting components in the same direction as the plurality of electrode terminals, on the one hand, the assembling difficulty of electrically connecting the tab groups with the electrode terminals through the current collecting components can be reduced, which is beneficial for improving the production efficiency of the battery cell; and on the other hand, the shell can provide some protection for the current collecting components to reduce the wear or damage of the current collecting components during use. By disposing the current collecting components outside the shell and providing a channel for allowing the tab groups to pass through on the shell, the tab groups can be electrically connected to the electrode terminals through the current collecting components after passing through the shell. With a battery cell adopting such a structure, later inspection of the current collecting component is facilitated, and maintenance and replacement of the current collecting components is facilitated, which is beneficial for reducing the maintenance cost of the battery cell.

In some embodiments, the tab group comprises a plurality of tabs spaced apart along a third direction, and the first direction, the second direction and the third direction are non-coplanar and intersect with each other; where, along the second direction, at least some of the current collecting components are located on the side of the main body group provided with the tab groups, and some of the tabs are located on the side of the current collecting components away from the main body group and connected with the current collecting components.

In the above technical solution, the tab group comprises a plurality of tabs spaced apart along the third direction, and the plurality of tabs are all connected with the current collecting components to realize electrical connection between the pole group and the current collecting components, where, by providing some of the tabs to be located on the side of the current collecting components away from the main body group in the second direction, and these tabs to be connected to the current collecting components, the tabs are configured as a structure that bypasses the current collecting components and is connected to the side of the current collecting components away from the main body group. On the one hand, the difficulty of connection between the tabs and the current collecting components can be reduced to improve the efficiency of assembly between the tabs and the current collecting components, and on the other hand, the phenomenon that the current collecting components press the tabs downward in the direction close to the main body group can be alleviated to reduce the risk of short circuit caused by the tabs being inserted upside down into the main body group.

In some embodiments, the current collecting component is provided with an avoidance region, the avoidance region runs through the current collecting component along the second direction, and the tab passes through the avoidance region and is connected to the side of the current collecting component away from the main body group.

In the above technical solution, the current collecting component is provided with an avoidance region, and the avoidance region runs through both sides of the current collecting component along the second direction, so that the plurality of tabs in the tab group can be connected to the side of the current collecting component away from the main body group after passing through the avoidance region. With a battery cell adopting such a structure, the tab can be configured as a structure connected to the side of the current collecting component away from the main body group, which can reduce the difficulty of the tab bypassing the current collecting component and optimize the length of the tab bypassing the current collecting component, thereby alleviating the phenomenon of redundancy of the tab and reducing the manufacturing cost of the battery cell.

In some embodiments, the avoidance region is a through hole provided on the current collecting component; or alternatively, the avoidance region is a notch provided at an edge of the current collecting component in the first direction.

In the above technical solution, the avoidance region may be a through hole provided on the current collecting component or a notch provided at an edge of the current collecting component, so that the tab can be connected to the side of the current collecting component away from the main body group after passing through the avoidance region. The structure is simple and easy to manufacture.

In some embodiments, the plurality of current collecting components comprise at least one first current collecting component, and along the first direction, two of the tab groups close to each other in two adjacent pole groups are both connected to one of the first current collecting components; where the first current collecting component is provided with two rows of the avoidance regions spaced apart along the first direction, and each row of the avoidance regions is used for allowing the plurality of tabs in one of the tab groups to pass through.

In the above technical solution, two rows of avoidance regions arranged along the first direction are provided on the first current collecting component, and the two rows of avoidance regions respectively allow the plurality of tabs in the two tab groups to pass through, so that the tabs in the two tab groups close to each other in the two adjacent pole groups are connected to the side of the first current collecting component away from the main body group, which is beneficial for reducing the difficulty of assembling the battery cell and reducing the interference effect between the two tab groups.

In some embodiments, the plurality of current collecting components comprise two second current collecting components, and along the first direction, the first current collecting component is located between the two second current collecting components; where, along the first direction, the two second current collecting components are connected to the two tab groups farthest apart from each other in the plurality of pole groups respectively.

In the above technical solution, the plurality of current collecting components further comprise two second current collecting components, and the first current collecting component is disposed between the two second current collecting components in the first direction, so that the first current collecting component and the second current collecting component are of a structure arranged along the first direction and where the two second current collecting components are respectively located on two sides, so that the two tab groups farthest apart from each other in the plurality of pole groups can be connected to the two second current collecting components respectively, which is beneficial for reducing the difficulty of assembling the battery cell.

In some embodiments, along the second direction, the wall portion is located on one side of the plurality of pole groups, the tab groups are disposed on the side of the main body group facing the wall portion, and the current collecting components are disposed on the side of the main body group facing the wall portion.

In the above technical solution, the wall portion is provided to be located on the side of the pole group provided with the tab groups in the second direction, and the current collecting components are disposed on the side of the main body group facing the wall portion, so that the current collecting components can connect the tab groups and the electrode terminals disposed on the wall portion, and the current collecting components can be disposed as a whole on the side of the main body group facing the wall portion, which is beneficial for saving the space occupied by the current collecting components to improve the energy density of the battery cell.

In some embodiments, along the second direction, the side of the current collecting component facing the wall portion is provided with a protrusion, and the protrusion is connected to the electrode terminal.

In the above technical solution, a protrusion is provided on the side of the current collecting component facing the wall portion along the second direction, so that the current collecting component can be connected with the electrode terminal through the protrusion to achieve electrical connection between the current collecting component and the electrode terminal. With a current collecting component adopting such a structure, the difficulty of assembling the current collecting component with the electrode terminal can be reduced, and the structure in which connection with the electrode terminal is achieved through the protrusion can improve the reliability of connection between the current collecting component and the electrode terminal.

In some embodiments, along the third direction, the wall portion is located on one side of the plurality of pole groups, and the first direction, the second direction and the third direction are non-coplanar and intersect each other; where the current collecting component comprises a first connection portion and a second connection portion connected to each other, and along the third direction, the first connection portion is located on the side of the plurality of pole groups facing the wall portion, and the first connection portion is connected with the electrode terminal, and along the second direction, the second connection portion is located on the side of the main body group provided with the tab group, and the second connection portion is connected to the tab group.

In the above technical solution, the wall portion of the shell is located on one side of the plurality of pole groups in the third direction, and the current collecting component comprises a first connection portion located on the side of the plurality of pole groups facing the wall portion in the third direction and a second connection portion located on the side of the main body group provided with the tab group in the second direction. By connecting the first connection portion with the electrode terminal disposed on the wall portion and connecting the second connection portion with the tab group, the tab group is electrically connected to the electrode terminal through the current collecting component. With a battery cell adopting such a structure, on the one hand, the area of the shell provided with the electrode terminal and the area of the main body group provided with the tab group are separated from each other, so that no electrode terminal is provided in the area of the shell that the side of the main body group provided with the tab group faces, which facilitates stacking of a plurality of battery cells along the second direction; on the other hand, the area of the current collecting component connected to the electrode terminal and the area of the current collecting component connected to the tab group can be separated from each other, which is beneficial for reducing the difficulty of assembling the current collecting component with the electrode terminal and the tab group, and reducing the interference effect between the electrode terminal and the tab group, especially when the electrode terminal and the tab group are both welded and connected to the current collecting component, the mutual influence between the welding molten pool for the electrode terminal and the current collecting component and the welding molten pool for the tab group and the current collecting component can be effectively reduced, which is beneficial for improving the assembly quality and stability of connection of the electrode terminal and the tab group to the current collecting component.

In some embodiments, along the third direction, the side of the first connection portion facing the wall portion is provided with a protrusion, and the protrusion is connected with the electrode terminal.

In the above technical solution, a protrusion is provided on the side of the first connection portion of the current collecting component facing the wall portion, so that the first connection portion of the current collecting component can be connected with the electrode terminal through the protrusion to achieve electrical connection between the current collecting component and the electrode terminal. With a current collecting component adopting such a structure, the difficulty of assembling the first connection portion of the current collecting component with the electrode terminal can be reduced and the structure in which connection with the electrode terminal is achieved through the protrusion can improve the reliability of connection between the first connection portion of the current collecting component and the electrode terminal.

In some embodiments, along the first direction, a buffer is provided between two adjacent pole groups.

In the above technical solution, a buffer is provided between two adjacent pole groups, so that the buffer can provide buffering between the two adjacent pole groups, so that the buffer can absorb the expansion force and collision force between the pole groups, thereby effectively alleviating the phenomenon of collision between the two adjacent pole groups, and effectively alleviating the extrusion phenomenon caused by the expansion of the two adjacent pole groups relative to each other, and consequently effectively improving the reliability and service life of the battery cell.

In some embodiments, the main body group comprises N main body portions stacked along the third direction, and the tab group comprises a plurality of tabs spaced apart along the third direction, the tabs are in one-to-one correspondence with the main body portions, and the tabs are connected to one end of the main body portion in the second direction, and the first direction, the second direction and the third direction are non-coplanar and intersect each other, where N ≥ 4.

In the above technical solution, the number of the main body portions in the main body group of the pole group stacked in the third direction is set to be greater than or equal to 4, so as to increase the number of electrode assemblies in the pole group stacked in the third direction, so that large-capacity battery cells can be realized. Large-capacity battery cells can be realized without increasing the winding size or stacking size of a single electrode assembly, which is beneficial for reducing the manufacturing difficulty and manufacturing cost of a single electrode assembly.

In some embodiments, the shell is of a cuboid shape. Along the second direction, the shell has two opposite first outer surfaces, and the first outer surfaces are the outer surfaces of the shell with the largest area.

In the above technical solution, the shell of the battery cell is configured in a cuboid structure, and the first outer surfaces of the shell in the second direction are the surfaces with the largest area among the outer surfaces of the shell, and the tab group is disposed on the side of the main body group facing the largest wall of the shell, thereby facilitating the assembly of the tab group with other members and facilitating subsequent maintenance of the tab group.

In some embodiments, the shell comprises a case and an end cover; an accommodating chamber having an opening is formed inside the case, and the accommodating chamber is used to accommodate the pole groups; and the end cover closes the opening; where the end cover is the wall portion; or alternatively, the case comprises the wall portion.

In the above technical solution, the wall portion of the shell is configured as the end cover of the shell for closing the opening. With a battery cell adopting such a structure, the assembly of the electrode terminal on the end cover is facilitated, which is beneficial for reducing the difficulty of assembly of the battery cell, so as to improve the production efficiency of the battery cell. The wall portion of the shell is configured as a wall of the case. With a battery cell adopting such a structure, the area of the shell where the electrode terminal is installed can be positioned far away from the end cover, thereby alleviating the phenomenon that the force generated by the pulling or twisting of the wall portion by the electrode terminal and other members directly acts on the end cover, which is beneficial for reducing the risk of failure of connection between the end cover and the case, and consequently for effectively reducing the risk of leakage of the battery cell during use.

In a second aspect, an embodiment of the present application further provides a battery, including the aforementioned battery cell.

In a third aspect, an embodiment of the present application further provides an electrical apparatus, including the aforementioned battery cell, the battery cell being used to provide electric energy.

In a fourth aspect, an embodiment of the present application further provides an energy storage cabinet, including a plurality of the aforementioned battery cells.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell according to some embodiments of the present application;
FIG. 5 is a schematic structural view of an electrode assembly of a pole group of a battery cell according to some embodiments of the present application;
FIG. 6 is a schematic assembly view of a pole group and a current collecting component according to some embodiments of the present application;
FIG. 7 is a schematic structural view of a second current collecting component of a battery cell according to some embodiments of the present application;
FIG. 8 is a schematic structural view of a second current collecting component of a battery cell according to some embodiments of the present application in another embodiment;
FIG. 9 is a schematic structural view of a first current collecting component of a battery cell according to some embodiments of the present application;
FIG. 10 is a schematic structural view of a battery cell according to yet some other embodiments of the present application;
FIG. 11 is an exploded structural view of a battery cell according to yet some other embodiments of the present application;
FIG. 12 is a schematic structural view of a first current collecting component of a battery cell according to yet some other embodiments of the present application;
FIG. 13 is a schematic structural view of a second current collecting component of a battery cell according to yet some other embodiments of the present application; and
FIG. 14 is a schematic structural view of a second current collecting component of a battery cell according to yet some other embodiments of the present application in another embodiment.

Reference numerals: 1000 - vehicle; 100 - battery; 10 - box; 11 - first box body; 12 - second box body; 20 - battery cell; 21 - shell; 211 - wall portion; 212 - case; 2121 - opening; 213 - end cover; 22 - pole group; 221 - main body group; 222 - tab group; 223 - electrode assembly; 2231- main body portion; 2232 - tab; 23 - electrode terminal; 24 - current collecting component; 241 - avoidance region; 242 - protrusion; 243 - first connection portion; 244 - second connection portion; 25 - first current collecting component; 26 - second current collecting component; 200 - controller; 300 - motor; X - first direction; Y - second direction; Z - third direction.

### DESCRIPTION OF EMBODIMENTS

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may be made of foam metal. The foam metal may be foam nickel, foam copper, foam aluminum, a foam alloy, or the like. When the foam metal is used as the positive electrode, the surface of the foam metal may not be provided with a positive electrode active material, or of course, may alternatively be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be made of metal foil, foam metal, or a composite current collector. For example, as the metal foil, silver surface-treated aluminum or stainless steel, stainless steel, copper, aluminum, nickel, carbon electrode, nickel, titanium, or the like can be used. The foam metal may be foam nickel, foam copper, foam aluminum, a foam alloy, or the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

As an example, the spacer may be continuously provided between any adjacent positive electrode plates or negative electrode plates by folding or winding.

In some implementations, the shape of the electrode assembly may be flat, polygonal prism, or the like.

In some implementations, the electrode assembly is provided with tabs that can conduct current out of the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a prismatic battery cell, a pouch battery cell, or a battery cell in another shape. The prismatic battery cell includes, but is not limited to, a square-shell battery cell, a blade-shaped battery cell, and a multi-prism battery. For example, the multi-prism battery may be a hexagonal prism battery, and the like.

The battery mentioned in the embodiments of the present application refers to a single physical module comprising one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient, thus being an important component for the current development of new energy. The development of the battery technology needs to consider many design factors at the same time, such as energy density, cycle life, electric capacity, charge-discharge rate and other performance parameters.

For a general battery cell, the battery cell usually includes a shell and an electrode assembly accommodated in the shell, the electrode assembly includes a main body portion and two tabs connected to one end of the main body portion, the two tabs have opposite polarities, so that the two tabs output or input the positive and negative electrodes of the electrode assembly respectively. As the demand for the electric capacity of the battery cell becomes increasingly higher, in large-capacity battery cells in the related art, in order to increase the electric capacity of the battery cell, a plurality of electrode assemblies are usually stacked in the shell of the battery cell, and the plurality of electrode assemblies are arranged in an array to increase the electric capacity of the electrode assembly. However, with a battery cell of such a structure, when the tabs of a plurality of rows of electrode assemblies are assembled with the electrode terminals to realize the output or input of electrical energy of the battery cell, the tabs of the plurality of rows of electrode assemblies need to be electrically connected to the corresponding electrode terminals, which results in more difficult assembly and more numerous assembly processes, which is adverse to optimizing the production rhythm of the battery cell, resulting in low production efficiency and high manufacturing cost of the battery cell.

Based on the aforementioned considerations, in order to solve the problems of low production efficiency and high production cost of battery cells, embodiments of the present application provide a battery cell, which comprises a shell, a plurality of pole groups and a plurality of electrode terminals. The shell has a wall portion. The plurality of pole groups are accommodated in the shell and arranged along a first direction. The pole groups comprise a main body group and two tab groups. The two tab groups are spaced apart along the first direction on one side of the main body group in a second direction, and the two tab groups have opposite polarities. The second direction intersects with the first direction. A plurality of electrode terminals are installed on the wall portion and are spaced apart along the first direction. Along the first direction, two tab groups close to each other in two adjacent pole groups have the same polarity and are electrically connected to one electrode terminal in common, and two tab groups farthest apart from each other in the plurality of pole groups are electrically connected to two electrode terminals respectively.

In a battery cell of such a structure, a plurality of pole groups arranged along a first direction are provided in the shell of the battery cell, and each pole group comprises a main body group and two tab groups with opposite polarities spaced apart along the first direction on one side of the main body group, so that the battery cell is provided with a plurality of electrode assemblies, which is beneficial for improving the electric capacity of the battery cell to realize a large-capacity battery cell. The two tab groups close to each other in the first direction in two adjacent pole groups are provided to have the same polarity and be electrically connected to the same electrode terminal, and the two tab groups farthest apart from each other in the plurality of pole groups are connected to two electrode terminals respectively, so that the input or output of electric energy of the battery cell can be realized simply by electrically connecting the two tab groups close to each other in two adjacent pole groups to one electrode terminal, so that the two tab groups close to each other in the two adjacent pole groups can share one electrode terminal. As such, with a battery cell adopting such a structure, the electrode terminals provided on the wall portion of the shell can be saved to optimize the process of assembling the electrode terminals on the shell, and only one electrode terminal needs to be electrically connected to the two tab groups to complete the assembly process of the two tab groups, which is beneficial for optimizing the production rhythm of the battery cell, thereby effectively improving the production efficiency of the battery cell, and reducing the manufacturing cost of the battery cell.

The battery cell disclosed in the embodiments of the present application can be used, without limitation, in an electrical apparatus, such as a vehicle, a ship, or an aircraft. A power source system of the electrical apparatus may be formed by the battery cell and battery disclosed in the present application, and the like, which is beneficial for alleviating the problem of numerous assembly processes of battery cells, so as to improve the production efficiency of battery cells and reduce the manufacturing cost of battery cells.

An embodiment of the present application provides an electrical apparatus using a battery as the power source. The electrical apparatus may be, but is not limited to, a mobile phone, a tablet, a laptop, an electric toy, an electric tool, a battery car, an electric vehicle, a ship, a spacecraft, or the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

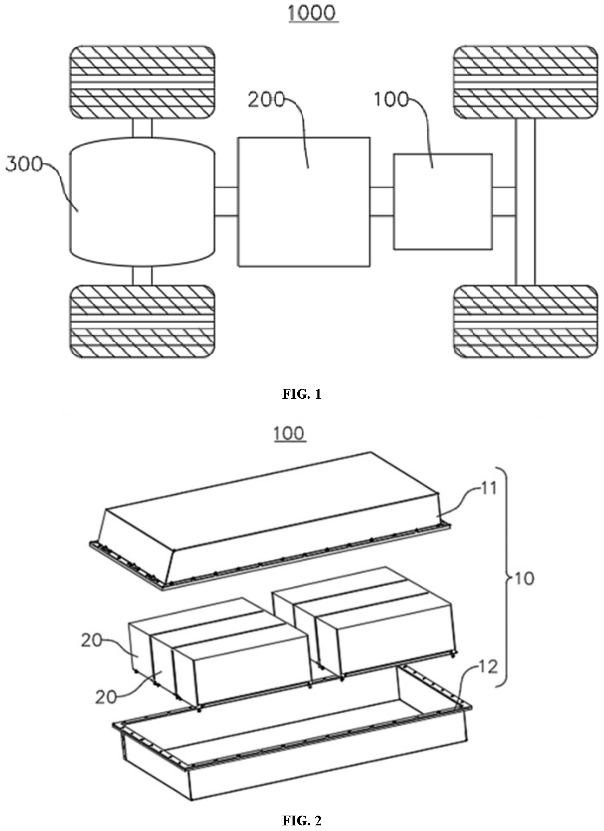

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

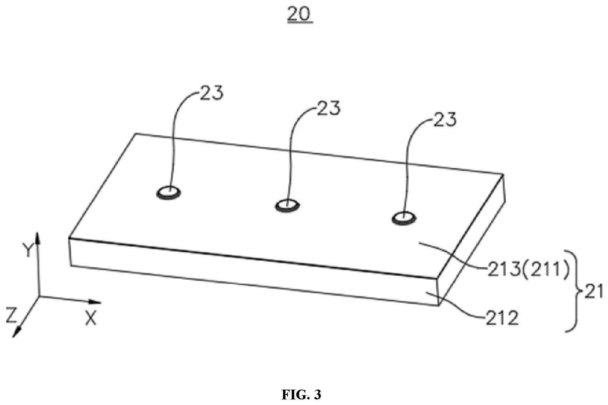

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box 10 and a battery cell 20, and the battery cell 20 is accommodated in the box 10,

where the box 10 is used to provide an assembling space for the battery cell 20, and the box 10 may be of various structures. In some embodiments, the box 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be of various shapes, such as a cylinder, a cuboid, or a cube. By way of example, in FIG. 2, the box 10 is of a cuboid shape.

In the battery 100, one battery cell 20 or a plurality of battery cells 20 may be provided in the box 10. If a plurality of battery cells 20 are provided in the box 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected together in series, parallel or series and parallel, and then, the whole formed by the plurality of battery cells 20 is accommodated in the box 10. Of course, the battery 100 may alternatively be in the form of a battery module composed of a plurality of battery cells 20 in series, parallel or series and parallel first, and then, a plurality of battery modules are connected in series, parallel or series and parallel to form a whole which is accommodated in the box 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery, or may be a lithium-sulfur battery, a sodium-ion battery or a magnesium-ion battery, but is not limited thereto. The battery cell 20 may be of a cuboid shape, a prism shape or other shapes. By way of example, in FIG. 3, the battery cell 20 is of a cuboid structure.

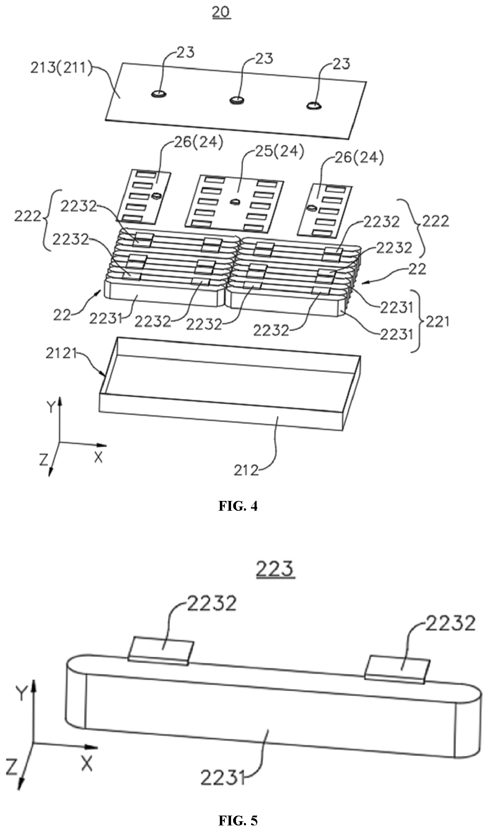

According to some embodiments of the present application, referring to FIG. 3 and further referring to FIG. 4 and FIG. 5, FIG. 4 is an exploded structural view of a battery cell 20 according to some embodiments of the present application, and FIG. 5 is a schematic structural view of an electrode assembly 223 of a pole group 22 of the battery cell 20 according to some embodiments of the present application. The present application provides a battery cell 20, and the battery cell 20 includes a shell 21, a plurality of pole groups 22 and a plurality of electrode terminals 23. The shell 21 has a wall portion 211. A plurality of pole groups 22 are accommodated in the shell 21 and arranged along a first direction X. The pole groups 22 comprise a main body group 221 and two tab groups 222. The two tab groups 222 are spaced apart along the first direction X on one side of the main body group 221 in a second direction Y, and the two tab groups 222 have opposite polarities. The second direction Y intersects with the first direction X. A plurality of electrode terminals 23 are installed on the wall portion 211 and are spaced apart along the first direction X. Along the first direction X, two tab groups 222 close to each other in two adjacent pole groups 22 have the same polarity and are electrically connected to one electrode terminal 23 in common, and two tab groups 222 farthest apart from each other in the plurality of pole groups 22 are electrically connected to two electrode terminals 23 respectively.

The shell 21 may be further used to accommodate an electrolyte, such as an electrolyte solution. The shell 21 may also be made of various materials, such as copper, iron, aluminum, steel, or aluminum alloy.

In some embodiments, the shell 21 may include a case 212 and an end cover 213. An accommodating chamber is formed inside the case 212, the accommodating chamber is used to accommodate the pole groups 22, and the accommodating chamber has an opening 2121. In other words, the case 212 is of a hollow structure having the opening 2121 at one end, and the end cover 213 covers the opening 2121 of the case 212 and forms a sealed connection to form a sealed space for accommodating the pole groups 22 and the electrolyte solution.

In assembling the battery cell 20, the plurality of pole groups 22 may be placed in the case 212 first, the case 212 is filled with the electrolyte solution, and then the opening 2121 of the case 212 is covered by the end cover 213, so as to complete the assembling of the battery cell 20.

The case 212 may be in a variety of shapes, such as a cuboid or prismatic structure. The shape of the case 212 may be determined according to the specific shape of the pole group 22. For example, if the pole group 22 is of a cuboid structure, a case 212 of a cuboid structure may be selected. Of course, the end cover 213 may also be of a variety of structures. For example, the end cover 213 may be of a plate-like structure, a hollow structure with one end open, or the like. For example, in FIG. 4, the case 212 is of a cuboid structure, and the end cover 213 is of a plate-like structure.

It should be noted that the wall portion 211 for installing the electrode terminal 23 may be the end cover 213 of the shell 21, or may be a wall of the case 212. By way of example, in FIG. 3 and FIG. 4, the wall portion 211 is the end cover 213 of the shell 21. Of course, in some embodiments, the wall portion 211 may alternatively be the bottom wall of the case 212 of the shell 21 disposed opposite to the end cover 213 or the side wall of the case 212 of the shell 21 connected with and adjacent to the end cover 213.

Of course, it can be understood that the shell 21 is not limited to the aforementioned structures, and the shell 21 may alternatively be of other structures. For example, the shell 21 may include a case 212 and two end covers 213, the case 212 is of a hollow structure with openings 2121 on two opposite sides, and each end cover 213 correspondingly covers an opening 2121 of the case 212 and forms a sealed connection, so as to form a sealed space for accommodating the pole groups 22 and the electrolyte. In other words, the case 212 is formed with openings 2121 on two opposite sides, and the two end covers 213 respectively cover the two sides of the case 212 to close the corresponding openings 2121.

It should be noted that, as shown in FIG. 4 and FIG. 5, the pole group 22 provided in the battery cell 20 is formed by stacking a plurality of electrode assemblies 223, and the plurality of electrode assemblies 223 are stacked along the third direction Z, that is, the pole group 22 includes a plurality of electrode assemblies 223, and the plurality of electrode assemblies 223 are stacked along the third direction Z, where each electrode assembly 223 includes a main body portion 2231 and two tabs 2232 with opposite polarities, that is, the two tabs 2232 of each electrode assembly 223 are respectively used to output the positive electrode and the negative electrode of the electrode assembly 223, and the two tabs 2232 are both disposed at the same end of the main body portion 2231 in the second direction Y. The main body portions 2231 of the plurality of electrode assemblies 223 are stacked along the third direction Z to form the main body group 221 of the pole group 22, that is, the main body group 221 includes a plurality of main body portions 2231 stacked along the third direction Z, and the two tabs 2232 of the plurality of electrode assemblies 223 respectively form two tab groups 222 of the pole group 22, so that the two tab groups 222 have opposite polarities, that is, each tab group 222 includes a plurality of tabs 2232 arranged along the third direction Z, and the plurality of tabs 2232 in each tab group 222 have the same polarity. By way of example, the first direction X, the second direction Y and the third direction Z are perpendicular to each other.

The electrode assembly 223 is a member in the battery cell 20 where an electrochemical reaction occurs. The electrode assembly 223 may be of a variety of structures. For example, the electrode assembly 223 may be of a wound structure formed by winding a positive electrode plate, a spacer, and a negative electrode plate, or a stacked structure formed by stacking a positive electrode plate, a spacer, and a negative electrode plate. The main body portion 2231 of the electrode assembly 223 is a region where the electrode assembly 223 undergoes chemical reactions in the battery cell 20. The main body portion 2231 is of a structure formed by winding a region of the positive electrode plate coated with a positive electrode active material layer, a spacer, and a region of the negative electrode plate coated with a negative electrode active material layer, and mainly works by moving metal ions between the positive electrode plate and the negative electrode plate with opposite polarities.

The tab 2232 is the positive electrode or negative electrode of the electrode assembly 223 to output or input the positive electrode or negative electrode of the electrode assembly 223. If the tab 2232 is the positive electrode of the electrode assembly 223, the tab 2232 is the member formed by stacking and connecting the regions on the positive electrode plate that are not coated with the positive electrode active material layer. If the tab 2232 is the negative electrode of the electrode assembly 223, the tab 2232 is the component formed by stacking and connecting the regions on the negative electrode plate that are not coated with the negative electrode active material layer.

By way of example, the spacer is a separator, and the main material of the separator may be selected from a group consisting of at least one of glass fiber, non-woven fabric, polyethylene, polypropylene, and polyvinylidene fluoride.

A plurality of pole groups 22 are arranged along the first direction X, that is, the battery cell 20 accommodates a plurality of rows of electrode assemblies 223 arranged along the first direction X, and each row of electrode assemblies 223 includes a plurality of electrode assemblies 223 stacked along the third direction Z, so that the plurality of electrode assemblies 223 are provided in an arranged manner in the shell 21, and accordingly, each row of electrode assemblies 223 is a pole group 22.

By way of example, in FIG. 4, two pole groups 22 arranged along the first direction X are provided in the shell 21, and each pole group 22 includes a plurality of electrode assemblies 223 stacked along the third direction Z. Of course, in other embodiments, the number of pole groups 22 provided in the shell 21 may alternatively be three, four, five or six, etc.

Along the first direction X, the two tab groups 222 close to each other in two adjacent pole groups 22 have the same polarity and are electrically connected to an electrode terminal 23 in common. That is, in every two adjacent pole groups 22, the two pole groups 22 together include four tab groups 222 arranged along the first direction X, and the two tab groups 222 located in the middle of the four tab groups 222 have the same polarity and are electrically connected to the same electrode terminal 23. For example, among the four tab groups 222 in two adjacent pole groups 22, the two tab groups 222 located in the middle may be both positive electrodes, and the two tab groups 222 located on both sides may be both negative electrodes. That is, in every two adjacent pole groups 22, the polarities of the four tab groups 222 arranged along the first direction X are negative electrode, positive electrode, positive electrode and negative electrode, in sequence. Of course, alternatively, among the four tab groups 222 in two adjacent pole groups 22, the two tab groups 222 located in the middle may be both negative electrodes, and the two tab groups 222 located on both sides may be both positive electrodes. That is, in every two adjacent pole groups 22, the polarities of the four tab groups 222 arranged along the first direction X are positive electrode, negative electrode, negative electrode and positive electrode, in sequence.

Along the first direction X, the two tab groups 222 farthest apart from each other in the plurality of pole groups 22 are electrically connected to two electrode terminals 23, respectively. That is, among the plurality of pole groups 22, the plurality of pole groups 22 together include a plurality of tab groups 222 arranged along the first direction X, and the two outermost tab groups 222 among the plurality of tab groups 222 are connected to two electrode terminals 23, respectively.

By way of example, in FIG. 4, two pole groups 22 arranged along the first direction X are provided in the shell 21, and the two adjacent tab groups 222 in the two pole groups 22 have the same polarity and share an electrode terminal 23, and the two outermost tab groups 222 in the two pole groups 22 have the same polarity and are connected to the two electrode terminals 23 respectively, so that only three electrode terminals 23 spaced apart along the first direction X are provided on the wall portion 211, so that it is unnecessary to provide an electrode terminal 23 for each tab group 222.

The electrode terminal 23 functions to input or output electric energy of the battery cell 20, and may be made of various materials, such as copper, iron, aluminum, steel, aluminum alloy, or the like.

By way of example, in FIG. 3 and FIG. 4, two pole groups 22 arranged along the first direction X are provided in the shell 21, and accordingly, three electrode terminals 23 are provided on the wall portion 211, and the three electrode terminals 23 are spaced apart along the first direction X. Two adjacent tab groups 222 in the two pole groups 22 have the same polarity and are both electrically connected to the electrode terminal 23 located in the middle among the three electrode terminals 23, and the two outermost tab groups 222 in the two pole groups 22 are electrically connected to the other two electrode terminals 23, respectively, so as to realize the input or output of electrical energy of the battery cell 20.

It should be noted that the plurality of tabs 2232 in the tab group 222 and the electrode terminals 23 may be directly connected, for example, by abutting or welding etc., to each other to achieve electrical connection between the tab group 222 and the electrode terminals 23. Of course, the plurality of tabs 2232 in the tab group 222 and the electrode terminals 23 may be indirectly connected, that is, the plurality of tabs 2232 in the tab group 222 are interconnected with other components, and then connected with the electrode terminals 23 through the other components.

Optionally, the plurality of electrode terminals 23 are all insulated from and installed on the wall portion 211, that is, no electrical connection is formed between the electrode terminals 23 and the wall portion 211. Of course, in other embodiments, one electrode terminal 23 among the plurality of electrode terminals 23 may alternatively be directly installed on the wall portion 211, so that the wall portion 211 is electrically connected to the electrode terminal 23. At this time, the wall portion 211 and the electrode terminal 23 carry the same charge, and the remaining electrode terminals 23 are all insulated from and installed on the wall portion 211.

By way of example, an assembly hole may be provided on the wall portion 211, and the assembly hole runs through both sides of the wall portion 211 along the thickness direction of the wall portion 211, and the electrode terminal 23 passes through the assembly hole.

The battery cell 20 may further include an insulating member, and the insulating member is disposed between the wall portion 211 and the electrode terminal 23 to insulate and isolate the wall portion 211 from the electrode terminal 23, thereby achieving insulated installation of the electrode terminal 23 on the wall portion 211.

By way of example, the insulating member may be made of rubber, plastic, silica gel, or the like.

In some embodiments, the battery cell 20 may further include a pressure relief mechanism, the pressure relief mechanism is disposed on the shell 21 to relieve the pressure inside the battery cell 20 when the internal pressure or temperature of the battery cell 20 reaches a predetermined value.

Optionally, the pressure relief mechanism may be disposed on the end cover 213 of the shell 21, or disposed on the case 212 of the shell 21. Similarly, the pressure relief mechanism and the shell 21 may be of an integrally formed structure or a splittable structure. If the pressure relief mechanism and the shell 21 are of an integrally formed structure, the pressure relief mechanism is an area on the shell 21 where a weakened structure is formed, for example, an area on the shell 21 where a notched groove is provided. If the pressure relief mechanism and the shell 21 are of a splittable structure, the pressure relief mechanism may be connected to the shell 21 by welding, and accordingly, the pressure relief mechanism may be a pressure relief component such as an explosion-proof valve, an explosion-proof disc, an air valve, a pressure relief valve or a safety valve.

A plurality of pole groups 22 arranged along a first direction X are provided in the shell 21 of the battery cell 20, and each pole group 22 comprises a main body group 221 and two tab groups 222 with opposite polarities spaced apart along the first direction X on one side of the main body group 221, so that the battery cell 20 is provided with a plurality of electrode assemblies 223, which is beneficial for improving the electric capacity of the battery cell 20 to realize a large-capacity battery cell 20. Specifically, two tab groups 222 close to each other in the first direction X in two adjacent pole groups 22 are provided to have the same polarity and be electrically connected to the same electrode terminal 23, and the two tab groups 222 farthest apart from each other in the plurality of pole groups 22 are connected to two electrode terminals 23 respectively, so that the input or output of electric energy of the battery cell 20 can be realized simply by electrically connecting the two tab groups 222 close to each other in two adjacent pole groups 22 to one electrode terminal 23, so that the two tab groups 222 close to each other in two adjacent pole groups 22 can share one electrode terminal 23. As such, with a battery cell 20 adopting such a structure, the electrode terminals 23 provided on the wall portion 211 of the shell 21 can be saved to optimize the process of assembling the electrode terminal 23 on the shell 21, and only one electrode terminal 23 needs to be electrically connected to the two tab groups 222 to complete the assembly process of the two tab groups 222, which is beneficial for optimizing the production rhythm of the battery cell 20, thereby effectively improving the production efficiency of the battery cell 20, and reducing the manufacturing cost of the battery cell 20.

According to some embodiments of the present application, as shown in FIG. 4, the battery cell 20 may further include a plurality of current collecting components 24 disposed in one-to-one correspondence with the plurality of electrode terminals 23, and the current collecting components 24 are connected with the corresponding electrode terminals 23. Along the first direction X, two tab groups 222 close to each other in two adjacent pole groups 22 are electrically connected to one current collecting component 24 in common, and two tab groups 222 farthest apart from each other in the plurality of pole groups 22 are electrically connected to two current collecting components 24 respectively.

The plurality of current collecting components 24 are disposed in one-to-one correspondence with the plurality of electrode terminals 23, that is, each current collecting component 24 is connected with one electrode terminal 23, and the number and arrangement direction of the current collecting components 24 are the same as the number and arrangement direction of the electrode terminals 23.

By way of example, the current collecting component 24 is welded and connected to the electrode terminal 23. Of course, in other embodiments, the current collecting component 24 may alternatively be abutted against, clamped to, etc., the electrode terminal 23.

The two tab groups 222 close to each other in two adjacent pole groups 22 are electrically connected to one current collecting component 24 in common. That is, in every two adjacent pole groups 22, the two pole groups 22 together include four tab groups 222 arranged along the first direction X, and the two tab groups 222 located in the middle of the four tab groups 222 have the same polarity and are connected with one electrode terminal 23 through the same current collecting component 24.

The two tab groups 222 farthest apart from each other in the plurality of pole groups 22 are electrically connected to two current collecting components 24, respectively. That is, among the plurality of pole groups 22, the plurality of pole groups 22 together include a plurality of tab groups 222 arranged along the first direction X, and the two outermost tab groups 222 among the plurality of tab groups 222 are connected with the two electrode terminals 23 through the two current collecting components 24, respectively.

By way of example, the tabs 2232 in the tab group 222 are welded and connected to the current collecting component 24. Of course, in other embodiments, the tabs 2232 in the tab group 222 may alternatively be abutted against, screwed to, etc., the current collecting component 24.

It should be noted that the current collecting component 24 of the battery cell 20 may be disposed inside the shell 21, so that the tab group 222 is connected with the current collecting component 24 inside the shell 21. Of course, the current collecting component 24 of the battery cell 20 may alternatively be disposed outside the shell 21, so that the tab group 222 is connected with the current collecting component 24 outside the shell 21.

The battery cell 20 is further provided with a plurality of current collecting components 24 corresponding to the electrode terminals 23, and the two tab groups 222 farthest apart from each other in the plurality of pole groups 22 are respectively connected with two electrode terminals 23 through two current collecting components 24, and the two tab groups 222 close to each other along the first direction X in the two adjacent pole groups 22 are connected with the same electrode terminal 23 through a current collecting component 24 to realize the input or output of electric energy of the battery cell 20. With a battery cell 20 adopting such a structure, the difficulty of assembling the tab groups 222 with the electrode terminals 23 can be reduced, especially the difficulty of assembling the two tab groups 222 close to each other in two adjacent pole groups 22 with the same electrode terminal 23, which is beneficial for reducing the manufacturing cost of the battery cell 20 and improving the production efficiency of the battery cell 20.

In some embodiments, with continued reference to FIG. 4, the plurality of current collecting components 24 are all disposed in the shell 21, and the plurality of current collecting components 24 are spaced apart along the first direction X. That is, the current collecting components 24 are disposed between the main body group 221 of the pole group 22 and the shell 21.

By disposing all of the plurality of current collecting components 24 in the shell 21, and by arranging the plurality of current collecting components 24 in the same direction as the plurality of electrode terminals 23, on the one hand, the assembling difficulty of electrically connecting the tab groups 222 with the electrode terminals 23 through the current collecting components 24 can be reduced, which is beneficial for improving the production efficiency of the battery cell 20; and on the other hand, the shell 21 can provide some protection for the current collecting components 24 to reduce the wear or damage of the current collecting components 24 during use.

Of course, the structure of the battery cell 20 is not limited thereto. In other embodiments, the battery cell 20 may alternatively be of other structures. For example, along the second direction Y, the side of the shell 21 close to the tab group 222 is provided with a channel for allowing each tab group 222 to extend out, and each tab group 222 can extend out of the shell 21 through the corresponding channel. The plurality of current collecting components 24 are all disposed outside of the shell 21, and the current collecting components 24 are electrically connected to the extended tab groups 222.

Along the second direction Y, the side of the shell 21 close to the tab group 222 is provided with a channel for each tab group 222 to extend out, that is, the area of the shell 21 that the side of the main body group 221 provided with the tab group 222 in the second direction Y faces is provided with a channel for allowing the tab group 222 to pass through, so that the tab 2232 in the tab group 222 can extend out of the shell 21 and then be connected with the current collecting component 24 located outside the shell 21, and the current collecting component 24 is connected with the electrode terminal 23 outside the shell 21.

By way of example, the tab group 222 includes a plurality of tabs 2232 arranged along a third direction Z. One channel may be provided for each tab group 222 so that the plurality of tabs 2232 in one tab group 222 all extend out of the shell 21 through one channel. Alternatively, a plurality of channels may be provided for the plurality of tabs 2232 in each tab group 222 so that each tab 2232 can extend out of the shell 21 through one hole, which is beneficial for reducing interference effects between the plurality of tabs 2232.

By disposing the current collecting component 24 outside the shell 21 and providing a channel for allowing the tab group 222 to pass through on the shell 21, the tab group 222 can be electrically connected to the electrode terminal 23 through the current collecting component 24 after passing through the shell 21. With a battery cell 20 adopting such a structure, later inspection of the current collecting component 24 is facilitated, and maintenance and replacement of the current collecting component 24 is facilitated, which can reduce the maintenance cost of the battery cell 20.

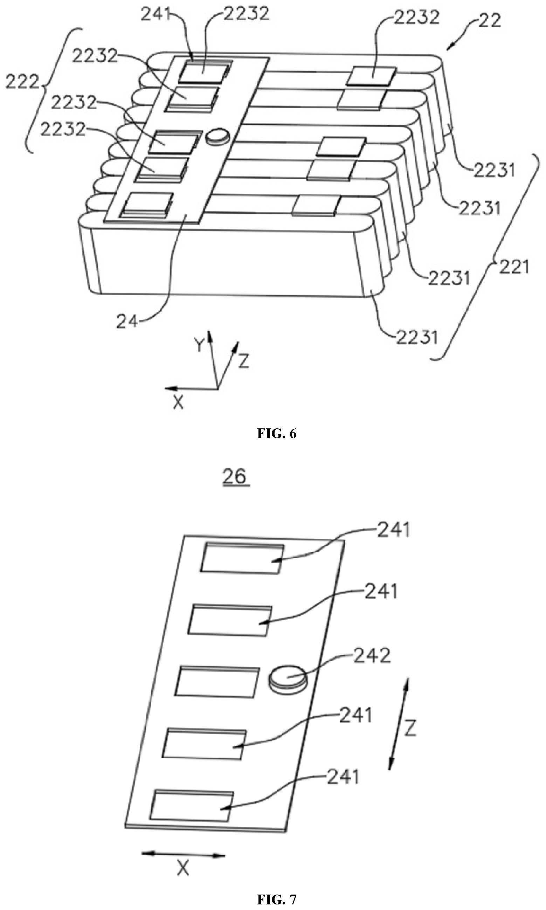

According to some embodiments of the present application, referring to FIG. 4 and FIG. 5 and further referring to FIG. 6 and FIG. 7, FIG. 6 is a schematic assembly view of a pole group 22 and a current collecting component 24 according to some embodiments of the present application; and FIG. 7 is a schematic structural view of a second current collecting component 26 of a battery cell 20 according to some embodiments of the present application. The tab group 222 includes a plurality of tabs 2232 spaced apart along the third direction Z. The first direction X, the second direction Y and the third direction Z are non-coplanar and intersect with each other. Along the second direction Y, at least some of the current collecting components 24 are located on the side of the main body group 221 provided with the tab group 222, and some of the tabs 2232 are located on the side of the current collecting component 24 away from the main body group 221 and connected with the current collecting components 24.

The tab group 222 includes a plurality of tabs 2232 spaced apart along the third direction Z, that is, the tab group 222 includes a plurality of tabs 2232 having the same polarity and spaced apart along the third direction Z in the plurality of electrode assemblies 223 stacked along the third direction.

The first direction X, the second direction Y and the third direction Z are non-coplanar and intersect each other, that is, the first direction X, the second direction Y and the third direction Z intersect each other, and every two directions form a plane, so that the three planes formed by the three directions respectively are non-coplanar. As an example, the first direction X, the second direction Y, and the third direction Z are perpendicular to each other.

At least some of the current collecting components 24 are located on the side of the main body group 221 provided with the tab groups 222, that is, the current collecting components 24 may be entirely located on the side of the main body group 221 provided with the tab groups 222, or only some of them may be located on the side of the main body group 221 provided with the tab groups 222. Of course, in the structure where at least some of the current collecting components 24 are located on the side of the main body group 221 provided with the tab groups 222, the current collecting components 24 may be located inside or outside the shell 21.

Some of the tabs 2232 are located on the side of the current collecting component 24 away from the main body group 221 and are connected with the current collecting component 24, that is, the tabs 2232 are connected to the side of the current collecting component 24 away from the main body group 221. Optionally, there may be a variety of structures in which some of the tabs 2232 are located on the side of the current collecting component 24 away from the main body group 221 and are connected with the current collecting component 24. For example, the tabs 2232 may be of a structure that bypasses the edge of the current collecting component 24 from the side of the current collecting component 24 facing the main body group 221 and then is connected to the side of the current collecting component 24 away from the main body group 221. Alternatively, the current collecting component 24 may be provided with a channel for allowing the tab 2232 to pass through, so that the tab 2232 is connected to the side of the current collecting component 24 away from the main body group 221 after passing through the current collecting component 24.

The tab group 222 includes a plurality of tabs 2232 spaced apart along the third direction Z, and the plurality of tabs 2232 are all connected with the current collecting component 24 to realize electrical connection between the pole group 22 and the current collecting component 24, where, by providing some of the tabs 2232 to be located on the side of the current collecting component 24 away from the main body group 221 in the second direction Y, and these tabs to be connected with the current collecting component 24, the tabs 2232 are configured as a structure that bypasses the current collecting component 24 and is connected to the side of the current collecting component 24 away from the main body group 221. On the one hand, the difficulty of connection between the tabs 2232 and the current collecting component 24 can be reduced to improve the efficiency of assembly between the tabs 2232 and the current collecting component 24, and on the other hand, the phenomenon that the current collecting component 24 presses the tabs 2232 downward in the direction close to the main body group 221 can be alleviated to reduce the risk of short circuit caused by the tabs 2232 being inserted upside down into the main body group 221.

According to some embodiments of the present application, as shown in FIG. 4, FIG. 6 and FIG. 7, the current collecting component 24 is provided with an avoidance region 241, and the avoidance region 241 runs through the current collecting component 24 along the second direction Y. The tab 2232 passes through the avoidance region 241 and is connected to the side of the current collecting component 24 away from the main body group 221.

The avoidance region 241 runs through the current collecting component 24 along the second direction Y, that is, the avoidance region 241 runs through the surfaces of both sides of the current collecting component 24 in the second direction Y.

Optionally, there may be a variety of structures in which the current collecting component 24 is provided with the avoidance region 241. The current collecting component 24 may be provided with only one avoidance region 241, so that the plurality of tabs 2232 in the tab group 222 all pass through the current collecting component 24 through the same avoidance region 241 and then are connected to the side of the current collecting component 24 away from the main body group 221. Alternatively the current collecting component 24 is provided with one avoidance region 241 for each tab 2232. There may alternatively be a plurality of avoidance regions 241 provided on the current collecting component 24, and each avoidance region 241 can allow one tab 2232 or a plurality of tabs 2232 to pass through.

By way of example, the current collecting component 24 is provided with a row of avoidance regions 241 corresponding to one tab group 222, and each row of avoidance regions 241 includes a plurality of avoidance regions 241 spaced apart along the third direction Z. Two adjacent tabs 2232 among the plurality of tabs 2232 in the tab group 222 pass through the current collecting component 24 through an avoidance region 241 and are connected to the side of the current collecting component 24 away from the main body group 221.

An avoidance region 241 is provided on the current collecting component 24, and the avoidance region 241 runs through both sides of the current collecting component 24 along the second direction Y, so that a plurality of tabs 2232 in the tab group 222 can be connected to the side of the current collecting component 24 away from the main body group 221 after passing through the avoidance region 241. With a battery cell 20 adopting such a structure, the tab 2232 can be configured into a structure connected to the side of the current collecting component 24 away from the main body group 221, which can reduce the difficulty of the tab 2232 bypassing the current collecting component 24 and optimize the length of the tab 2232 bypassing the current collecting component 24, thereby alleviating the phenomenon of redundancy of the tab 2232 and reducing the manufacturing cost of the battery cell 20.

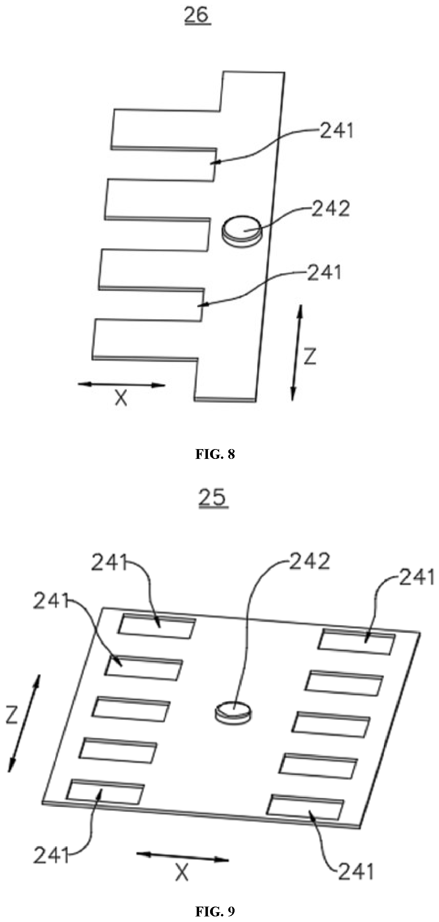

In some embodiments, as shown in FIG. 7, the avoidance region 241 is a through hole provided on the current collecting component 24. Of course, in other embodiments, the avoidance region 241 may alternatively be of other structures. For example, referring to FIG. 8, FIG. 8 is a schematic structural view of a second current collecting component 26 of a battery cell 20 according to some embodiments of the present application in another embodiment. The avoidance region 241 is a notch provided at an edge of the current collecting component 24 in the first direction X, that is, the avoidance region 241 is a notch provided on the surface of the edge of the current collecting component 24 in the first direction X, and the notch runs through both sides of the current collecting component 24 along the second direction Y.

The avoidance region 241 may be a through hole provided on the current collecting component 24 or a notch provided at an edge of the current collecting component 24, so that the tab 2232 can be connected to the side of the current collecting component 24 away from the main body group 221 after passing through the avoidance region 241. The structure is simple and easy to manufacture.

According to some embodiments of the present application, referring to FIG. 4 and further referring to FIG. 9, FIG. 9 is a schematic structural view of a first current collecting component 25 of a battery cell 20 according to some embodiments of the present application. The plurality of current collecting components 24 include at least one first current collecting component 25. Along the first direction X, two tab groups 222 close to each other in two adjacent pole groups 22 are both connected to one first current collecting component 25. The first current collecting component 25 is provided with two rows of avoidance regions 241 spaced apart along the first direction X. Each row of avoidance regions 241 is used for allowing a plurality of tabs 2232 in a tab group 222 to pass through.

The first current collecting component 25 is a current collecting component 24 among the plurality of current collecting components 24 that is used to be connected to two tab groups 222 close to each other in two adjacent pole groups 22. That is, the current collecting component 24 connected to two tab groups 222 close to each other in two adjacent pole groups 22 is the first current collecting component 25.

The first current collecting component 25 is provided with two rows of avoidance regions 241 spaced apart along the first direction X, that is, the first current collecting component 25 is provided with two rows of avoidance regions 241 spaced apart along the first direction X and corresponding to the two tab groups 222.

It should be noted that, of the two rows of avoidance regions 241 provided on the first current collecting component 25, each row of avoidance regions 241 may be provided with only one avoidance region 241, and the plurality of tabs 2232 in the tab group 222 all pass through the first current collecting component 25 through the same avoidance region 241 and are then connected to the side of the first current collecting component 25 away from the main body group 221; or alternatively, it may include a plurality of avoidance regions 241 spaced apart along the third direction Z, and each tab 2232 in the tab group 222 passes through the first current collecting component 25 through one avoidance region 241, or every two tabs 2232 or every three tabs 2232 etc. in the tab group 222 pass through the first current collecting component 25 through one avoidance region 241. By way of example, in FIG. 4 and FIG. 9, the first current collecting component 25 is provided with two rows of avoidance regions 241 spaced apart along the first direction X, and each row of avoidance regions 241 includes a plurality of avoidance regions 241 spaced apart along the third direction Z. Every two tabs 2232 among the plurality of tabs 2232 in the tab group 222 pass through the first current collecting component 25 through one avoidance region 241 and then are connected to the side of the first current collecting component 25 away from the main body group 221.

The first current collecting component 25 is provided with two rows of avoidance regions 241 arranged along the first direction X, and the two rows of avoidance regions 241 are respectively provided for allowing a plurality of tabs 2232 in the two tab groups 222 to pass through, so that the tabs 2232 in the two tab groups 222 close to each other in the two adjacent pole groups 22 are connected to the side of the first current collecting component 25 away from the main body group 221, which is beneficial for reducing the difficulty of assembling the battery cell 20 and reducing the interference effect between the two tab groups 222.

According to some embodiments of the present application, referring to FIG. 4, FIG. 7 and FIG. 8, the plurality of current collecting components 24 include two second current collecting components 26, and along the first direction X, the first current collecting component 25 is located between the two second current collecting components 26. Along the first direction X, the two second current collecting components 26 are respectively connected to two tab groups 222 farthest apart from each other in the plurality of pole groups 22.

The second current collecting component 26 is the outermost current collecting component 24 among the plurality of current collecting components 24 spaced apart in the first direction X, and is used for the two tab groups 222 farthest apart from each other in the plurality of pole groups 22. The current collecting component 24 located between the two second current collecting components 26 is the first current collecting component 25. That is, the current collecting component 24 connected to the two outermost tab groups 222 in the first direction X among the plurality of tab groups 222 in the plurality of pole groups 22 is the second current collecting component 26.

By way of example, in an embodiment where the current collecting component 24 is provided with the avoidance region 241, the second current collecting component 26 is provided with a plurality of avoidance regions 241 spaced apart along the third direction Z for allowing the plurality of tabs 2232 in the corresponding tab group 222 to pass through.

The plurality of current collecting components 24 further comprise two second current collecting components 26, and the first current collecting component 25 is disposed between the two second current collecting components 26 in the first direction X, so that the first current collecting component 25 and the second current collecting component 26 are of a structure arranged along the first direction X and where the two second current collecting components 26 are respectively located on two sides, so that the two tab groups 222 farthest apart from each other in the plurality of pole groups 22 can be connected to the two second current collecting components 26 respectively, which is beneficial for reducing the difficulty of assembling the battery cell 20.

According to some embodiments of the present application, referring to FIG. 3 and FIG. 4, along the second direction Y, the wall portion 211 is located on one side of the plurality of pole groups 22, the tab group 222 is disposed on the side of the main body group 221 facing the wall portion 211, and the current collecting component 24 is disposed on the side of the main body group 221 facing the wall portion 211.

The tab group 222 is disposed on the side of the main body group 221 facing the wall portion 211, that is, the main body group 221 and the wall portion 211 are of a structure arranged along the second direction Y, and the tab group 222 is connected to the side of the main body group 221 facing the wall portion 211.

The current collecting component 24 is disposed on the side of the main body group 221 facing the wall portion 211, that is, the current collecting component 24 and the wall portion 211 are arranged along the second direction Y on the side of the main body group 221 provided with the tab group 222. By way of example, in FIG. 4, the current collecting component 24 is disposed inside the shell 21, that is, in this structure, the main body group 221, the current collecting component 24 and the wall portion 211 are arranged in sequence along the second direction Y, so that the current collecting component 24 is located between the main body group 221 and the wall portion 211 along the second direction Y. Of course, in an embodiment where the current collecting component 24 is disposed outside the shell 21, then in this structure, the main body group 221, the wall portion 211 and the current collecting component 24 are arranged in sequence along the second direction Y, so that the current collecting component 24 is located on the side of the wall portion 211 away from the main body group 221 in the second direction Y, so that the wall portion 211 is located between the main body group 221 and the current collecting component 24 in the second direction Y.

The wall portion 211 is provided to be located on the side of the pole group 22 provided with the tab group 222 in the second direction Y, and the current collecting component 24 is disposed on the side of the main body group 221 facing the wall portion 211, so that the current collecting component 24 can connect the tab group 222 and the electrode terminal 23 disposed on the wall portion 211, and the current collecting component 24 can be disposed as a whole on the side of the main body group 221 facing the wall portion 211, which is beneficial for saving the space occupied by the current collecting component 24 to improve the energy density of the battery cell 20.

In some embodiments, as shown in FIG. 4, FIG. 7 and FIG. 9, along the second direction Y, the side of the current collecting component 24 facing the wall portion 211 is provided with a protrusion 242, and the protrusion 242 is connected with the electrode terminal 23.

By way of example, the current collecting component 24 is disposed inside the shell 21, and accordingly, the protrusion 242 protrudes from the side of the current collecting component 24 away from the main body group 221. Of course, in the embodiment where the current collecting component 24 is disposed outside the shell 21, the current collecting component 24 is located on the side of the wall portion 211 away from the main body group 221, and the protrusion 242 protrudes from the side of the current collecting component 24 facing the main body group 221.

By way of example, the current collecting component 24 is welded and connected to the electrode terminal 23 through the protrusion 242.

A protrusion 242 is provided on the side of the current collecting component 24 facing the wall portion 211 along the second direction Y, so that the current collecting component 24 can be connected with the electrode terminal 23 through the protrusion 242 to achieve electrical connection between the current collecting component 24 and the electrode terminal 23. With a current collecting component 24 adopting such a structure, the difficulty of assembling the current collecting component 24 with the electrode terminal 23 can be reduced and the structure in which connection with the electrode terminal 23 is achieved through the protrusion 242 can improve the reliability of connection between the current collecting component 24 and the electrode terminal 23.

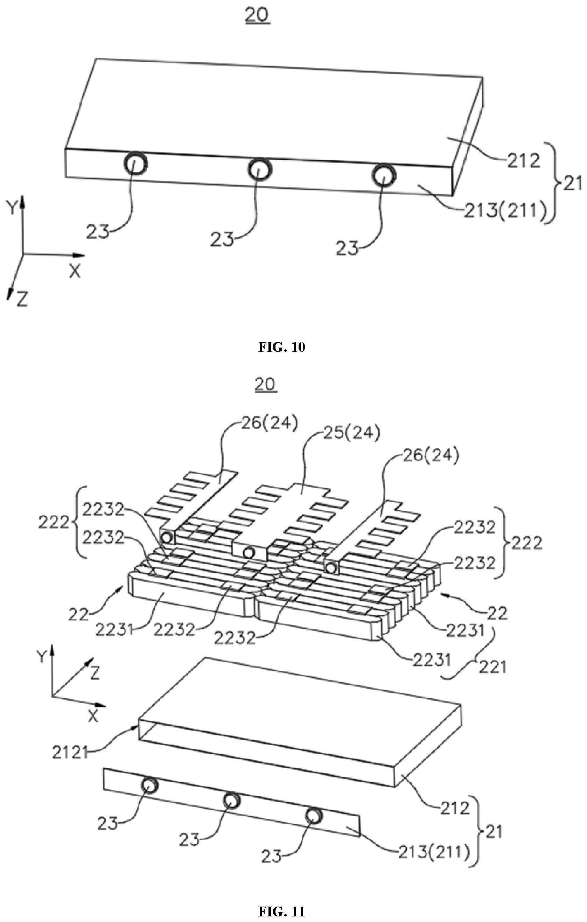

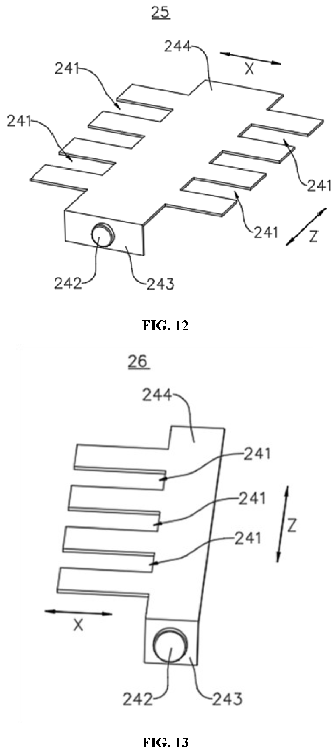

According to some embodiments of the present application, referring to FIG. 10, FIG. 11, FIG. 12 and FIG. 13, FIG. 10 is a schematic structural view of a battery cell 20 according to yet some other embodiments of the present application; FIG. 11 is an exploded structural view of a battery cell 20 according to yet some other embodiments of the present application; FIG. 12 is a schematic structural view of a first current collecting component 25 of a battery cell 20 according to yet some other embodiments of the present application; and FIG. 13 is a schematic structural view of a second current collecting component 26 of a battery cell 20 according to yet some other embodiments of the present application. Along the third direction Z, the wall portion 211 is located on one side of the plurality of pole groups 22. The first direction X, the second direction Y and the third direction Z are non-coplanar and intersect with each other. The current collecting component 24 includes a first connection portion 243 and a second connection portion 244 that are connected to each other. Along the third direction Z, the first connection portion 243 is located on the side of the plurality of pole groups 22 facing the wall portion 211, and the first connection portion 243 is connected with the electrode terminal 23. Along the second direction Y, the second connection portion 244 is located on the side of the main body group 221 provided with the tab group 222, and the second connection portion 244 is connected with the tab group 222.

Along the third direction Z, the wall portion 211 is located on one side of the plurality of pole groups 22, that is, the wall of the shell 21 located on one side of the pole group 22 in the third direction Z is the wall portion 211, so that the electrode terminal 23 is located on one side of the pole group 22 in the third direction Z.

By way of example, in FIG. 11, the battery cell 20 is provided with only one wall portion 211, and the plurality of electrode terminals 23 are all installed on the one wall portion 211, so that the first connection portions 243 of the plurality of current collecting components 24 are all located on the side of the plurality of pole groups 22 facing the wall portion 211 in the third direction Z. Of course, in other embodiments, the battery cell 20 may alternatively be provided with two wall portions 211, and the two wall portions 211 are respectively located on two sides of the plurality of pole groups 22 in the third direction Z, and some of the plurality of electrode terminals 23 may be disposed on one wall portion 211 of the two wall portions 211, and the others are disposed on the other wall portion 211. In this embodiment, the first connection portion 243 of each current collecting component 24 is located on the side of the plurality of pole groups 22 facing the corresponding electrode terminal 23 in the third direction Z.

Along the third direction Z, the first connection portion 243 is located on the side of the plurality of pole groups 22 facing the wall portion 211, that is, along the third direction Z, the wall portion 211 and the first connection portion 243 are arranged on one side of the pole group 22. By way of example, in FIG. 11, the current collecting component 24 is disposed inside the shell 21, and accordingly, the pole group 22, the first connection portion 243 and the wall portion 211 are structures arranged in sequence along the third direction Z, that is, the first connection portion 243 is located between the pole group 22 and the wall portion 211 in the third direction Z. Of course, in the embodiment where the current collecting component 24 is disposed outside the shell 21, the first connection portion 243 is located on the side of the wall portion 211 away from the pole group 22 in the third direction Z, so that the pole group 22, the wall portion 211 and the first connection portion 243 are arranged in sequence along the third direction Z.

Along the second direction Y, the second connection portion 244 is located on the side of the main body group 221 provided with the tab group 222, that is, the second connection portion 244 and the main body group 221 are a structure arranged along the second direction Y, so that the second connection portion 244 and the first connection portion 243 are connected to each other to form a current collecting component 24 of an L-shaped structure. By way of example, in FIG. 11, the current collecting component 24 is disposed inside the shell 21, and accordingly, the second connection portion 244 of the current collecting component 24 is located on the side of the main body group 221 provided with the tab group 222 in the second direction Y, and is located between the main body group 221 and the shell 21. Of course, in the embodiment where the current collecting component 24 is disposed outside the shell 21, the second connection portion 244 of the current collecting component 24 is located on the side of the main body group 221 provided with the tab group 222 in the second direction Y, and is located on the side of the shell 21 away from the main body group 221.

The second connection portion 244 serves to connect the plurality of tabs 2232 in the tab group 222. There may be a variety of connection structures between the second connection portion 244 and the plurality of tabs 2232 in the tab group 222, such as welding, abutment or screwing.

As shown in FIG. 12 and FIG. 13, in the embodiment in which the current collecting component 24 is provided with an avoidance region 241, the avoidance region 241 is provided on the second connection portion 244 of the current collecting component 24, that is, the avoidance region 241 runs through both sides of the second connection portion 244 along the second direction Y, so that the plurality of tabs 2232 in the tab group 222 pass through the avoidance region 241 and are then connected to the side of the second connection portion 244 away from the main body group 221.

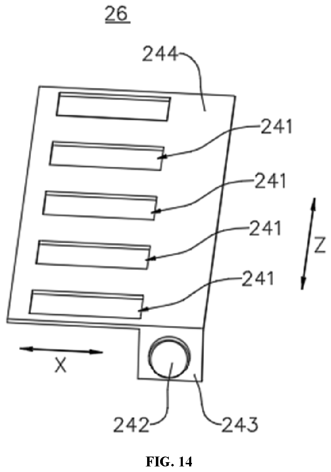

By way of example, in FIG. 12 and FIG. 13, the avoidance region 241 is a notch provided at an edge of the second connection portion 244 in the first direction X. Of course, in other embodiments, referring to FIG. 14, which is a schematic structural view of the second current collecting component 26 of the battery cell 20 according to yet some other embodiments of the present application in another embodiment, the avoidance region 241 may alternatively be a through hole provided on the second connection portion 244. Similarly, the number of the avoidance regions 241 provided on the second connection portion 244 may be one or more.

It should be noted that the first connection portion 243 and the second connection portion 244 may be of an integral structure, that is, the first connection portion 243 and the second connection portion 244 are integrally formed, and the first connection portion 243 and the second connection portion 244 may be made by an integral forming process such as stamping or casting. Of course, the first connection portion 243 and the second connection portion 244 can alternatively be of a splittable structure, that is, the first connection portion 243 and the second connection portion 244 are separately provided, and the first connection portion 243 and the second connection portion 244 can be connected by welding, screwing, or the like.

The wall portion 211 of the shell 21 is located on one side of the plurality of pole groups 22 in the third direction Z, and the current collecting component 24 comprises a first connection portion 243 located on the side of the plurality of pole groups 22 facing the wall portion 211 in the third direction Z and a second connection portion 244 located on the side of the main body group 221 provided with the tab group 222 in the second direction Y. By connecting the first connection portion 243 with the electrode terminal 23 disposed on the wall portion 211 and connecting the second connection portion 244 with the tab group 222, the tab group 222 is electrically connected to the electrode terminal 23 through the current collecting component 24. With a battery cell 20 adopting such a structure, on the one hand, the area of the shell 21 provided with the electrode terminal 23 and the area of the main body group 221 provided with the tab group 222 are separated from each other, so that no electrode terminal 23 is provided in the area of the shell 21 that the side of the main body group 221 provided with the tab group 222 faces, which facilitates stacking of a plurality of battery cells 20 along the second direction Y; on the other hand, the area where the current collecting component 24 is connected to the electrode terminal 23 and the area where the current collecting component 24 is connected to the tab group 222 can be separated from each other, which is beneficial for reducing the difficulty of assembling the current collecting component 24 with the electrode terminal 23 and the tab group 222, and reducing the interference effect between the electrode terminal 23 and the tab group 222, especially when the electrode terminal 23 and the tab group 222 are both welded and connected to the current collecting component 24, the mutual influence between the welding molten pool for the electrode terminal 23 and the current collecting component 24 and the welding molten pool for the tab group 222 and the current collecting component 24 can be effectively reduced, which is beneficial for improving the assembly quality and stability of connection of the electrode terminal 23 and the tab group 222 to the current collecting component 24.

In some embodiments, as shown in FIG. 11, FIG. 12 and FIG. 3, along the third direction Z, the side of the first connection portion 243 facing the wall portion 211 is provided with a protrusion 242, and the protrusion 242 is connected with the electrode terminal 23.

By way of example, the current collecting component 24 is disposed inside the shell 21, and accordingly, the protrusion 242 protrudes from the side of the first connection portion 243 of the current collecting component 24 away from the pole group 22. Of course, in the embodiment where the current collecting component 24 is disposed outside the shell 21, the first connection portion 243 of the current collecting component 24 is located on the side of the wall portion 211 away from the pole group 22, and the protrusion 242 protrudes from the side of the first connection portion 243 of the current collecting component 24 facing the pole group 22.

By way of example, the first connection portion 243 of the current collecting component 24 is welded and connected to the electrode terminal 23 through the protrusion 242.

A protrusion 242 is provided on the side of the first connection portion 243 of the current collecting component 24 facing the wall portion 211, so that the first connection portion 243 of the current collecting component 24 can be connected with the electrode terminal 23 through the protrusion 242 to achieve electrical connection between the current collecting component 24 and the electrode terminal 23. With a current collecting component 24 adopting such a structure, the difficulty of assembling the first connection portion 243 of the current collecting component 24 with the electrode terminal 23 can be reduced and the structure in which connection with the electrode terminal 23 is achieved through the protrusion 242 can improve the reliability of connection between the first connection portion 243 of the current collecting component 24 and the electrode terminal 23.

According to some embodiments of the present application, along the first direction X, a buffer (not shown in the figure) is provided between two adjacent pole groups 22. That is, two adjacent pole groups 22 are separated by a buffer.

By way of example, there may be various types of buffers, such as foam, silica gel pad or rubber pad.

It should be noted that the main body group 221 of the pole group 22 includes a plurality of main body portions 2231 stacked along the third direction Z. In some embodiments, a buffer may also be provided between every two adjacent main body portions 2231.

A buffer is provided between two adjacent pole groups 22, so that the buffer can provide buffering between the two adjacent pole groups 22, so that the buffer can absorb the expansion force and collision force between the pole groups 22, thereby effectively alleviating the phenomenon of collision between the two adjacent pole groups 22, and effectively alleviating the extrusion phenomenon caused by the expansion of the two adjacent pole groups 22 relative to each other, and consequently effectively improving the reliability and service life of the battery cell 20.

According to some embodiments of the present application, as shown in FIG. 4 and FIG. 11, the main body group 221 includes N main body portions 2231 stacked along the third direction Z, the tab group 222 includes a plurality of tabs 2232 spaced apart along the third direction Z, the tabs 2232 are in one-to-one correspondence with the main body portions 2231, the tabs 2232 are connected to one end of the main body portion 2231 in the second direction Y, and the first direction X, the second direction Y and the third direction Z are non-coplanar and intersect with each other, where N ≥ 4.

The main body group 221 is formed by the main body portions 2231 of a plurality of electrode assemblies 223 stacked along the third direction Z. The main body group 221 includes N main body portions 2231 stacked along the third direction Z, that is, the pole group 22 includes N electrode assemblies 223 stacked along the third direction Z.

By way of example, the number of electrode assemblies 223 arranged along the third direction Z in each pole group 22 may be four, five, six, seven, eight or nine, etc.

The number of the main body portions 2231 in the main body group 221 of the pole group 22 stacked in the third direction Z is set to be greater than or equal to 4, so as to increase the number of electrode assemblies 223 in the pole group 22 stacked in the third direction Z, so that large-capacity battery cells 20 can be realized. Large-capacity battery cells 20 can be realized without increasing the winding size or stacking size of a single electrode assembly 223, which is beneficial for reducing the manufacturing difficulty and manufacturing cost of a single electrode assembly 223.

According to some embodiments of the present application, with continued reference to FIG. 4 and FIG. 11, the shell 21 is of a cuboid shape. Along the second direction Y, the shell 21 has two opposite first outer surfaces. The first outer surfaces are the outer surfaces of the shell 21 with the largest area.

The first outer surface is the outer surface of the shell 21 with the largest area, that is, the size of the shell 21 in the second direction Y is smaller than the sizes of the shell 21 in the first direction X and the third direction Z.

The shell 21 of the battery cell 20 is configured in a cuboid structure, and the first outer surface of the shell 21 in the second direction Y is the surface with the largest area among the outer surfaces of the shell 21, and the tab group 222 is disposed on the side of the main body group 221 facing the largest wall of the shell 21, thereby facilitating the assembly of the tab group 222 with other members and facilitating subsequent maintenance of the tab group 222.

According to some embodiments of the present application, referring to FIG. 3 and FIG. 4 and FIG. 10 and FIG. 11, the shell 21 may include a case 212 and an end cover 213. An accommodating chamber having an opening 2121 is formed inside the case 212, and the accommodating chamber is used to accommodate the pole groups 22. The end cover 213 closes the opening 2121, and the end cover 213 is the wall portion 211.

The end cover 213 is the wall portion 211, that is, the electrode terminal 23 is installed on the end cover 213.

The wall portion 211 of the shell 21 is configured as the end cover 213 of the shell 21 for closing the opening 2121. With a battery cell 20 adopting such a structure, the assembly of the electrode terminal 23 on the end cover 213 is facilitated, which is beneficial for reducing the difficulty of assembly of the battery cell 20, so as to improve the production efficiency of the battery cell 20.

It should be noted that the structure of the battery cell 20 is not limited thereto. In some embodiments, the battery cell 20 may alternatively be of other structures. For example, the shell 21 may include a case 212 and an end cover 213. An accommodating chamber having an opening 2121 is formed inside the case 212, and the accommodating chamber is used for accommodating the pole group 22. The end cover 213 closes the opening 2121, the case 212 includes a wall portion 211, that is, the wall portion 211 is a wall of the case 212, and the wall portion 211 may be a bottom wall of the case 212 opposite to the end cover 213 or a side wall of the case 212 connected with and adjacent to the end cover 213, that is, the electrode terminal 23 is installed on the case 212.

The wall portion 211 of the shell 21 is configured as a wall of the case 212. With a battery cell 20 adopting such a structure, the area of the shell 21 where the electrode terminal 23 is installed can be positioned far away from the end cover 213, thereby alleviating the phenomenon that the force generated by the pulling or twisting of the wall portion 211 by the electrode terminal 23 and other components directly acts on the end cover 213, which is beneficial for reducing the risk of failure of connection between the end cover 213 and the case 212, and consequently for effectively reducing the risk of leakage of the battery cell 20 during use.

According to some embodiments of the present application, referring to FIG. 2, the present application further provides a battery 100, and the battery 100 includes the battery cell 20 according to any one of the above solutions.

In FIG. 2, the battery 100 may further include a box 10, and the battery cell 20 is accommodated in the box 10.

In some embodiments, the box 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder or a cuboid. Exemplarily, in FIG. 2, the box body 10 is of a cuboid structure.

Optionally, one battery cell 20 or a plurality of battery cells 20 may be arranged in the box body 10. Exemplarily, in FIG. 2, a plurality of battery cells 20 are arranged in the box body 10 of the battery 100, and the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box body 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box body 10 may be used as a part of the electrical apparatus. The electrical apparatus is, for example, a vehicle 1000, and the box body 10 may be used as a part of a chassis structure of the vehicle 1000. For example, a part of the box body 10 may become at least a part of a floor of the vehicle 1000, or a part of the box body 10 may become at least a part of a cross beam and a longitudinal beam of the vehicle 1000.

According to some embodiments of the present application, the present application further provides an electrical apparatus, the electrical apparatus includes a battery cell 20 according to any one of the above solutions, and the battery cell 20 is configured to provide electric energy to the electrical apparatus.

The electrical apparatus may be any one of the above devices or systems applying the battery cell 20.

According to some embodiments of the present application, the present application further provides an energy storage cabinet including a plurality of battery cells 20 of any one of the above solutions.

The energy storage cabinet includes a cabinet body, a plurality of battery cells 20 are disposed in the cabinet body, and the plurality of battery cells 20 are arranged along the second direction Y.

According to some embodiments of the present application, referring to FIG. 3 to FIG. 9, the present application provides a battery cell 20. The battery cell 20 includes a shell 21, a plurality of pole groups 22, a plurality of electrode terminals 23 and a plurality of current collecting components 24. The shell 21 has a wall portion 211. The shell 21 includes a case 212 and an end cover 213. An accommodating chamber having an opening 2121 is formed inside the case 212, the end cover 213 closes the opening 2121, and the end cover 213 is the wall portion 211. The shell 21 is of a cuboid shape. Along the second direction Y, the shell 21 has two opposite first outer surfaces. The first outer surfaces are the outer surfaces of the shell 21 with the largest area. The plurality of pole groups 22 are all accommodated in the accommodating chamber of the case 212 and are arranged along the first direction X. The wall portion 211 is located on one side of the plurality of pole groups 22 in the second direction Y. Each pole group 22 includes a plurality of electrode assemblies 223 stacked along the third direction Z. The electrode assembly 223 includes a main body portion 2231 and two tabs 2232. The two tabs 2232 have opposite polarities and are both disposed at the end of the main body portion 2231 facing the wall portion 211 in the second direction Y. The two tabs 2232 are spaced apart along the first direction X. The main body portions 2231 of the plurality of electrode assemblies 223 form the main body group 221 of the pole group 22, and the two tabs 2232 of the plurality of electrode assemblies 223 respectively form two tab groups 222 of the pole group 22, and the two tab groups 222 are spaced apart along the first direction X and have opposite polarities, that is, the main body group 221 includes a plurality of main body portions 2231 stacked along the third direction Z, and the tab group 222 includes a plurality of tabs 2232 arranged along the third direction Z. The first direction X, the second direction Y, and the third direction Z are perpendicular to each other. The pole group 22 includes N electrode assemblies 223 stacked along the third direction Z, where N ≥ 4. The plurality of electrode terminals 23 are all insulated from and installed on the wall portion 211 and are spaced apart along the first direction X. The plurality of current collecting components 24 are all disposed in the shell 21 and are spaced apart along the first direction X. The current collecting components 24 are disposed and connected with the electrode terminals 23 in one-to-one correspondence. Along the first direction X, two tab groups 222 close to each other in two adjacent pole groups 22 are connected with one current collecting component 24 in common, and the two tab groups 222 farthest apart from each other in the plurality of pole groups 22 are respectively connected with two current collecting components 24. The current collecting component 24 is provided with an avoidance region 241 which runs through the current collecting component 24 along the second direction Y. The plurality of tabs 2232 in the tab group 222 pass through the avoidance region 241 and are connected to the side of the current collecting component 24 facing the wall portion 211. The avoidance region 241 is a through hole provided on the current collecting component 24 or a notch provided at an edge of the current collecting component 24 in the first direction X. The plurality of current collecting components 24 include at least one first current collecting component 25. Along the first direction X, two tab groups 222 close to each other in two adjacent pole groups 22 are both connected to one first current collecting component 25. The first current collecting component 25 is provided with two rows of avoidance regions 241 spaced apart along the first direction X. Each row of avoidance regions 241 includes a plurality of avoidance regions 241 spaced apart along the third direction Z. Each row of avoidance regions 241 is used for allowing a plurality of tabs 2232 in one tab group 222 to pass through. The plurality of current collecting components 24 include two second current collecting components 26. Along the first direction X, the first current collecting component 25 is located between the two second current collecting components 26, and the two second current collecting components 26 are respectively connected to the two tab groups 222 farthest apart from each other in the plurality of pole groups 22. The second current collecting component 26 is provided with a plurality of avoidance regions 241 spaced apart along the third direction Z for allowing the plurality of tabs 2232 in the corresponding tab group 222 to pass through. Along the second direction Y, the side of the current collecting component 24 facing the wall portion 211 is provided with a protrusion 242, and the protrusion 242 is connected with the electrode terminal 23. Along the first direction X, a buffer is provided between two adjacent pole groups 22.

According to some embodiments of the present application, referring to FIG. 10 to FIG. 14, the present application provides a battery cell 20. The battery cell 20 includes a shell 21, a plurality of pole groups 22, a plurality of electrode terminals 23 and a plurality of current collecting components 24. The shell 21 has a wall portion 211. The shell 21 includes a case 212 and an end cover 213. An accommodating chamber having an opening 2121 is formed inside the case 212, the end cover 213 closes the opening 2121, and the end cover 213 is the wall portion 211. The shell 21 is of a cuboid shape. Along the second direction Y, the shell 21 has two opposite first outer surfaces. The first outer surfaces are the outer surfaces of the shell 21 with the largest area. The plurality of pole groups 22 are all accommodated in the accommodating chamber of the case 212 and are arranged along the first direction X. Each pole group 22 includes a plurality of electrode assemblies 223 stacked along the third direction Z. The electrode assembly 223 includes a main body portion 2231 and two tabs 2232. The two tabs 2232 have opposite polarities and are both disposed at one end of the main body portion 2231 in the second direction Y. The two tabs 2232 are spaced apart along the first direction X. The main body portions 2231 of the plurality of electrode assemblies 223 form the main body group 221 of the pole group 22, and the two tabs 2232 of the plurality of electrode assemblies 223 respectively form two tab groups 222 of the pole group 22, and the two tab groups 222 are spaced apart along the first direction X and have opposite polarities, that is, the main body group 221 includes a plurality of main body portions 2231 stacked along the third direction Z, the tab group 222 includes a plurality of tabs 2232 arranged along the third direction Z, and the wall portion 211 is located on one side of the plurality of pole groups 22 in the third direction Z. The first direction X, the second direction Y, and the third direction Z are perpendicular to each other. The pole group 22 includes N electrode assemblies 223 stacked along the third direction Z, where N ≥ 4. The plurality of electrode terminals 23 are all insulated from and installed on the wall portion 211 and are spaced apart along the first direction X. The plurality of current collecting components 24 are all disposed in the shell 21 and are spaced apart along the first direction X. The current collecting components 24 are disposed and connected with the electrode terminals 23 in one-to-one correspondence. Along the first direction X, two tab groups 222 close to each other in two adjacent pole groups 22 are connected with one current collecting component 24 in common, and the two tab groups 222 farthest apart from each other in the plurality of pole groups 22 are respectively connected with two current collecting components 24. The current collecting component 24 includes a first connection portion 243 and a second connection portion 244 that are connected to each other. Along the third direction Z, the first connection portion 243 is located on the side of the plurality of pole groups 22 facing the wall portion 211, and the first connection portion 243 is connected with the electrode terminal 23. Along the second direction Y, the second connection portion 244 is located on the side of the main body group 221 provided with the tab group 222, and the second connection portion 244 is connected with the tab group 222. The side of the first connection portion 243 facing the wall portion 211 is provided with a protrusion 242, and the protrusion 242 is connected with the electrode terminal 23. The second connection portion 244 is provided with an avoidance region 241 which runs through the second connection portion 244 along the second direction Y. The plurality of tabs 2232 in the tab group 222 pass through the avoidance region 241 and are connected to the side of the second connection portion 244 facing the wall portion 211. The avoidance region 241 is a through hole provided on the second connection portion 244 or a notch provided at an edge of the second connection portion 244 in the first direction X. The plurality of current collecting components 24 include at least one first current collecting component 25. Along the first direction X, two tab groups 222 close to each other in two adjacent pole groups 22 are both connected to the second connection portion 244 of one first current collecting component 25. The second connection portion 244 of the first current collecting component 25 is provided with two rows of avoidance regions 241 spaced apart along the first direction X. Each row of avoidance regions 241 includes a plurality of avoidance regions 241 spaced apart along the third direction Z. Each row of avoidance regions 241 is used for allowing a plurality of tabs 2232 in one tab group 222 to pass through. The plurality of current collecting components 24 include two second current collecting components 26. Along the first direction X, the first current collecting component 25 is located between the two second current collecting components 26, and the first connection portions 243 of the two second current collecting components 26 are respectively connected to the two tab groups 222 farthest apart from each other in the plurality of pole groups 22. The second connection portion 244 of the second current collecting component 26 is provided with a plurality of avoidance regions 241 spaced apart along the third direction Z for allowing the plurality of tabs 2232 in the corresponding tab group 222 to pass through. Along the first direction X, a buffer is provided between two adjacent pole groups 22.

It should be noted that in the case of no conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
a shell having a wall portion;
a plurality of pole groups accommodated in the shell and arranged along a first direction, the pole groups comprising a main body group and two tab groups, the two tab groups being spaced apart along the first direction on one side of the main body group in a second direction, and the two tab groups having opposite polarities, the second direction intersecting with the first direction; and
a plurality of electrode terminals installed on the wall portion and spaced apart along the first direction;
wherein along the first direction, the two tab groups close to each other in two adjacent pole groups have the same polarity and are electrically connected to one of the electrode terminals in common, and the two tab groups farthest apart from each other in the plurality of pole groups are electrically connected to two of the electrode terminals respectively.

2. The battery cell according to claim 1, further comprising:
a plurality of current collecting components provided in one-to-one correspondence with the plurality of electrode terminals, the current collecting components being connected with the corresponding electrode terminals;
wherein along the first direction, the two tab groups close to each other in the two adjacent pole groups are electrically connected to one of the current collecting components in common, and the two tab groups farthest apart from each other in the plurality of pole groups are electrically connected to two of the current collecting components respectively.

3. The battery cell according to claim 2, wherein the plurality of current collecting components are all disposed in the shell, and the plurality of current collecting components are spaced apart along the first direction; or
along the second direction, the side of the shell close to the tab groups is provided with a channel for allowing each of the tab groups to extend out, and each of the tab groups can extend out of the shell through the corresponding channel, the plurality of current collecting components are all disposed outside the shell, and the current collecting components are electrically connected to the extended tab groups.

4. The battery cell according to claim 2 or 3, wherein the tab group comprises a plurality of tabs spaced apart along a third direction, and the first direction, the second direction and the third direction are non-coplanar and intersect each other;
wherein along the second direction, at least some of the current collecting components are located on the side of the main body group provided with the tab groups, and some of the tabs are located on the side of the current collecting components away from the main body group and are connected with the current collecting components.

5. The battery cell according to claim 4, wherein the current collecting component is provided with an avoidance region, the avoidance region runs through the current collecting component along the second direction, and the tab passes through the avoidance region and is connected to the side of the current collecting component away from the main body group.

6. The battery cell according to claim 5, wherein the avoidance region is a through hole provided on the current collecting component; or
the avoidance region is a notch provided at an edge of the current collecting component in the first direction.

7. The battery cell according to claim 5 or 6, wherein the plurality of current collecting components comprise at least one first current collecting component, and along the first direction, the two tab groups close to each other in the two adjacent pole groups are both connected to one of the first current collecting components;
wherein the first current collecting component is provided with two rows of the avoidance regions spaced apart along the first direction, and each row of the avoidance regions is used for allowing the plurality of tabs in one of the tab groups to pass through.

8. The battery cell according to claim 7, wherein the plurality of current collecting components comprise two second current collecting components, and along the first direction, the first current collecting component is located between the two second current collecting components;
wherein along the first direction, two of the second current collecting components are respectively connected to the two tab groups farthest apart from each other in the plurality of pole groups.

9. The battery cell according to any one of claims 2 to 8, wherein along the second direction, the wall portion is located on one side of the plurality of pole groups, the tab groups are disposed on the side of the main body group facing the wall portion, and the current collecting components are disposed on the side of the main body group facing the wall portion.

10. The battery cell according to claim 9, wherein along the second direction, the side of the current collecting component facing the wall portion is provided with a protrusion, and the protrusion is connected with the electrode terminal.

11. The battery cell according to any one of claims 2 to 8, wherein along the third direction, the wall portion is located on one side of the plurality of pole groups, and the first direction, the second direction and the third direction are non-coplanar and intersect with each other;
wherein the current collecting component comprises a first connection portion and a second connection portion connected to each other, along the third direction, the first connection portion is located on the side of the plurality of pole groups facing the wall portion, and the first connection portion is connected with the electrode terminal, and along the second direction, the second connection portion is located on the side of the main body group provided with the tab group, and the second connection portion is connected to the tab group.

12. The battery cell according to claim 11, wherein along the third direction, the side of the connection portion facing the wall portion is provided with a protrusion, and the protrusion is connected with the electrode terminal.

13. The battery cell according to any one of claims 1 to 12, wherein along the first direction, a buffer is provided between the two adjacent pole groups.

14. The battery cell according to any one of claims 1 to 13, wherein the main body group comprises N main body portions stacked along the third direction, the tab group comprises a plurality of tabs spaced apart along the third direction, the tabs are in one-to-one correspondence with the main body portions, the tabs are connected to one end of the main body portion in the second direction, and the first direction, the second direction and the third direction are non-coplanar and intersect each other, where N ≥ 4.

15. The battery cell according to any one of claims 1 to 14, wherein the shell is of a cuboid shape, along the second direction, the shell has two opposite first outer surfaces, and the first outer surfaces are the outer surfaces of the shell with the largest area.

16. The battery cell according to any one of claims 1 to 15, wherein the shell comprises:
a case, an accommodating chamber having an opening being formed inside the case, and the accommodating chamber being used to accommodate the pole groups; and
an end cover closing the opening,
wherein the end cover is the wall portion; or
the case comprises the wall portion.

17. A battery, comprising the battery cell according to any one of claims 1 to 16.

18. An electrical apparatus, comprising the battery cell according to any one of claims 1 to 16, wherein the battery cell is used to provide electric energy.

19. An energy storage cabinet, comprising a plurality of the battery cells according to any one of claims 1 to 16.
